# EUROPÄISCHE PATENTSCHRIFT

(11) **EP 1 223 180 B1**
(45) Veröffentlichungstag und Bekanntmachung des Hinweises auf die Patenterteilung: **13.02.2008**
(21) Anmeldenummer: 01130035.7
(22) Anmeldetag: 18.12.2001
(51) Int. Cl.: C08F 12/04, C08J 9/20

(54) **Verfahren zur Herstellung wasserexpandierbarer Styrolpolymerisate**
Process for preparing water-expandable styrene polymers
Procédé de préparation de polymères de styrène expansibles à l'aide d'eau.

(30) Priorität: 13.01.2001 DE 10101403
(43) Veröffentlichungstag der Anmeldung: 17.07.2002
(73) Patentinhaber: BASF Aktiengesellschaft, 67056 Ludwigshafen (DE)
(72) Erfinder: Datko, Achim, Dr., 69226 Nussloch (DE); Dodel, Peter, Dr., 76835 Rhodt (DE); Hahn, Klaus, Dr., 67281 Kirchheim (DE)

(56) Entgegenhaltungen:
- WO-A-98/01489
- DE-A- 19 812 857

## Beschreibung

Die Erfindung betrifft ein Verfahren zur Herstellung wasserexpandierbarer Styrolpolymerisate (WEPS) durch Polymerisation von Styrol in wässriger Suspension, wobei die suspendierten Styroltröpfchen Wasser in feiner Verteilung emulgiert enthalten.

Teilchenförmige expandierbare Styrolpolymerisate (EPS) werden normalerweise hergestellt durch Polymerisation von Styrol in wässriger Suspension in Gegenwart eines flüchtigen organischen Treibmittels. Übliche Treibmittel sind Kohlenwasserstoffe, insbesondere Pentan. Aus Umweltschutzgründen muß bei der Herstellung und Verarbeitung von EPS emittiertes Pentan wieder aufgefangen werden. Dies ist aufwendig und kostenintensiv. Es ist daher sinnvoll diese organischen Substanzen längerfristig durch unbedenklichere Treibmittel zu ersetzen, beispielsweise durch Wasser.

In einer Dissertation der Universität Eindhoven "Water Expandable Polystyrene" von J.J. Crevecoeur aus dem Jahr 1997 und gleichartig in Polymer (1999), 3685-3689 ist ein Verfahren zur Herstellung von WEPS beschrieben, bei dem zunächst Wasser in feiner Verteilung in Styrol mit Hilfe von oberflächenaktiven Substanzen emulgiert, das Styrol bis zu einem Umsatz von 50 % polymerisiert, die Mischung unter Phasenumkehr in Wasser suspendiert und das Styrol schließlich mit Hilfe von Peroxid-Initiatoren auspolymerisiert wird. Als oberflächenaktive Substanzen werden amphiphile Emulgatoren eingesetzt, z.B. Natrium-Bis-(2-ethylhexyl)-sulfosuccinat oder Natrium-Styrolsulfonat oder Blockcopolymere aus Polystyrol-Blöcken und Polystyrolsulfonat-Blöcken. Alle diese Substanzen weisen sowohl einen hydrophilen als auch einen hydrophoben Rest auf und sind daher in der Lage, Wasser in Styrol zu emulgieren.

Auch in den Patentanmeldungen WO 98/01489 und WO 98/01501 sind Zweistufenverfahren zur Herstellung von WEPS beschrieben, bei denen als Emulgatoren amphiphile organische Substanzen bzw. wassermischbare polare Polymere eingesetzt werden. Es wird ausdrücklich gesagt, daß gute Ergebnisse nur erhalten werden, wenn in einer ersten Stufe in Masse vorpolymerisiert wird.

Diese Verfahren haben aber den Nachteil, daß sie umständlich in zwei Stufen durchgeführt werden: Erst wird Wasser in der Styrol/ Polystyrol-Mischung emulgiert, dann wird unter Phasenumkehr die organische Phase in Wasser suspendiert.

Aufgabe der Erfindung war es daher, ein einfacheres, einstufiges Verfahren zur Herstellung von WEPS zu entwickeln.

Diese Aufgabe wird erfindungsgemäß dadurch gelöst, daß zu Beginn oder im Verlauf der Suspensionspolymerisation als Emulgierhilfsmittel ein amphiphiler organischer Emulgator, der sowohl hydrophile als auch hydrophobe Gruppen trägt, oder ein polare Gruppen tragendes, mit Wasser mischbares Polymer zugesetzt wird, und daß die Polymerisation von Anfang an in wässriger Suspension durchgeführt wird.

Die amphiphilen Emulgatoren werden dabei in Mengen von vorzugsweise 0,1 bis 5 Gew.-%, insbesondere von 0,2 bis 3 Gew.-%, bezogen auf die Monomeren, zugesetzt. Geeignete Emulgatoren sind in WO 98/01489 beschrieben, bevorzugt sind Bisalkylsulfosuccinate, Sorbitol-C₈-C₂₀-Carboxylate und C₈-C₂₀-Alkylxylen-Sulfonate.

Die polaren Polymeren werden in Mengen von vorzugsweise 2 bis 20 Gew.-%, insbesondere von 3 bis 10 Gew.-%, bezogen auf die Monomeren, zugesetzt. Geeignete Polymere sind in WO 98/01501 beschrieben. Bevorzugt ist Polyvinylpyrrolidon, welches gleichzeitig als Suspensionsstabilisator wirkt.

Bei der erfindungsgemäßen Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylethen oder α-Methylstyrol ersetzt sein.

Bei der-Suspensionspolymerisation können die üblichen Hilfsmittel, wie z.B. Suspensionsstabilisatoren, Radikalinitiatoren, Flammschutzmittel, Kettenüberträger, Expandierhilfsmittel, Keimbildner und Weichmacher zugesetzt werden. Es ist vorteilhaft, als Suspensionsstabilisatoren organische Schutzkolloide, vorzugsweise in Mengen von 0,1 bis 1 Gew.-%, bezogen auf die Monomeren, zuzusetzen. Geeignete Schutzkolloide sind z.B. Polyvinylalkohol, Hydroxyethylcellulose und Polyvinylpyrrolidon. Weniger gut geeignet sind sogenannte Pickering-Stabilisatoren, wie Tricalciumphosphat und Magnesiumpyrophosphat, weil dann, wenn sie zusammen mit größeren Mengen an polaren Polymeren eingesetzt werden, die Suspension koagulieren kann. Bevorzugte Flammschutzmittel sind organische Bromverbindungen, wie Hexabromcyclododecan, die in Mengen von 0,1 bis 2 Gew.-%, bezogen auf die Monomeren zugesetzt werden.

Es ist günstig, die Polymerisation in Gegenwart von 1 bis 30, vorzugsweise 3 bis 15 Gew.-% Polystyrol durchzuführen, welches zweckmäßigerweise als styrolische Lösung eingesetzt wird. Statt reinem Polystyrol kann auch Polystyrol-Recyclat verwendet werden.

Die Festsubstanz wird bevorzugt gleich zu Beginn der Suspensionspolymerisation zugesetzt, man kann aber auch im Verlauf der Polymerisation bis zu einem Umsatz von 90 % zudosieren.

Die Suspensionspolymerisation wird zweckmäßigerweise in zwei Temperaturstufen durchgeführt, wobei zwei bei unterschiedlichen Temperaturen zerfallende Peroxid-Initiatoren eingesetzt werden. Zunächst wird die Suspension auf 80° bis 90°C erhitzt, wobei das erste Peroxid, z.B. Dibenzoylperoxid, zerfällt und die Polymerisation einleitet. Dann läßt man die Temperatur langsam auf 100 bis 140°C ansteigen. Dabei zerfällt dann das zweite Peroxid, z.B. Dicumylperoxid oder tert.Butylperbenzoat.

Es ist zweckmäßig, bei der Suspensionspolymerisation kräftig zu rühren. Dadurch, und unterstützt durch das Emulgierhilfsmittel, wird in den suspendierten Styroltröpfchen Wasser in feiner Verteilung emulgiert.

Die bei der Suspensionspolymerisation entstandenen WEPS-Partikel enthalten 2 bis 20, insbesondere 5 bis 15 Gew.-% Wasser. Ihre Partikelgröße beträgt 0,2 bis 5, vorzugsweise 0,5 bis 2 mm. Sie können mit 110 bis 140°C heißer Luft zu Schaumstoffpartikeln geschäumt werden. Ein besonders elegantes Schäumverfahren, welches zu Schaumpartikeln mit sehr niedriger Schüttdichte führt, ist in der Deutschen Patentanmeldung DE 1981285 beschrieben.

Die WEPS-Schaumpartikel können wie herkömmliche EPS-Schaumpartikel zu Schaumstoff-Platten, -Blöcken oder -Formteilen verschweißt werden, die als Isolier- oder Verpackungsmaterialien verwendet werden können.

Die im Beispiel genannten Teile und Prozente beziehen sich auf das Gewicht.

### Beispiel:

In einem druckfesten Rührkessel aus korrosionsfreiem Stahl wurde eine Mischung aus 150 Teilen Wasser, 0,1 Teilen Natriumpyrophosphat, 100 Teilen Styrol, 0,45 Teilen Dibenzoylperoxid und 0,15 Teilen tert.Butylperbenzoat (als Polymerisationsinitiatoren) sowie 0,65 Teilen Hexabromcyclododecan (als Flammschutzmittel) unter Rühren auf 90°C erhitzt. Nach 2 Stunden bei 90°C wurden 50 Teile einer 10 %igen wäßrigen Lösung von Polyvinylpyrrolidon zugegeben. Dann wurde weitere 2 Stunden bei 90°C, anschließend 2 Stunden bei 100°C und schließlich 2 Stunden bei 120°C gerührt. Das erhaltene Granulat mit einem mittleren Teilchendurchmesser von 0,79 mm hatte einen Wassergehalt von 3,0 %.

Das Granulat wurde mit 130°C heißer Luft auf eine Schüttdichte von 95 g/l aufgeschäumt.

## Patentansprüche

1. Verfahren zur Herstellung von wasserexpandierbaren Styrolpolymerisaten, welche 2 bis 20 Gew.-% Wasser enthalten, durch Polymerisation von Styrol in wässriger Suspension, wobei zu Beginn oder im Verlauf der Suspensionspolymerisation 2 bis 20 Gew.-%, bezogen auf die Monomeren, Polyvinylpyrrolidon zugesetzt wird.

2. Verfahren nach Anspruch 1, **dadurch gekennzeichnet, dass** 3 bis 10 Gew.-% Polyvinylpyrrolidon, bezogen auf die Monomeren, zugesetzt wird.

3. Verfahren nach Anspruch 1 oder 2, **dadurch gekennzeichnet, dass** die Suspensionspolymerisation in zwei Temperaturstufen durchgeführt wird, wobei zwei bei unterschiedlichen Temperaturen zerfallende Peroxid-Initiatoren eingesetzt werden.

## Claims

1. A process for preparing water-expandable styrene polymers comprising 2 to 20 wt% of water by polymerization of styrene in aqueous suspension, wherein 2 to 20 wt%, based on the monomers, of polyvinylpyrrolidone is added at the commencement of or in the course of the suspension polymerization.

2. The process according to claim 1, **characterized in that** 3 to 10 wt% of polyvinylpyrrolidone, based on the monomers, is added.

3. The process according to claim 1 or 2, **characterized in that** the suspension polymerization is carried out in two temperature stages using two peroxide initiators which decompose at different temperatures.

## Revendications

1. Procédé pour la préparation de polymères de styrène pouvant être expansés par de l'eau, qui contiennent 2 à 20 % en poids d'eau, grâce à la polymérisation de styrène en suspension aqueuse, 2 à 20 % en poids de polyvinylpyrrolidone, par rapport aux monomères, étant ajoutés au début ou au cours de la polymérisation en suspension.

2. Procédé selon la revendication 1, **caractérisé en ce que** 3 à 10 % en poids de polyvinylpyrrolidone, par rapport aux monomères, sont ajoutés.

3. Procédé selon la revendication 1 ou 2, **caractérisé en ce que** la polymérisation en suspension est mise en oeuvre en deux étapes de température, deux amorceurs au peroxyde avec des températures de décomposition différentes étant utilisés.
